# EUROPEAN PATENT APPLICATION

(11) **EP 2 590 128 A1**
(43) Date of publication of application: **08.05.2013**
(21) Application number: 11800815.0
(22) Date of filing: 28.06.2011
(51) Int. Cl.: G06Q 30/00

(54) **INFORMATION PROCESSING DEVICE, INFORMATION PROCESSING METHOD, INFORMATION PROCESSING PROGRAM, AND RECORDING MEDIUM IN WHICH INFORMATION PROCESSING PROGRAM IS RECORDED**

(30) Priority: 29.06.2010 JP 2010147723; 29.06.2010 JP 2010147720; 29.06.2010 JP 2010147719
(71) Applicant: Rakuten, Inc., Tokyo 140-0002 (JP)
(72) Inventor: SUGIURA Kenji, Tokyo 140-0002 (JP); SHIROGANE Yasuaki, Tokyo 140-0002 (JP)
(74) Representative: HOFFMANN EITLE
(86) International application number: PCT/JP2011/064734
(87) International publication number: WO 2012/002351

(57) **Abstract**

An information providing device which provides screen data including an advertisement display area, to a terminal device through a network, acquires posting information registered in a site on the network, and specifies a commercial transaction target based on the acquired posting information. The information providing device calculates the degree of attention of the commercial transaction target specified based on the acquired posting information, and determines the commercial transaction target which is an advertisement display target, based on the calculated degree of attention.

## Description

### Technical Field

The present invention relates to, for example, an information processing device which provides display data including an advertisement display area (for example, a webpage) to a terminal device through a network.

### Background Art

Conventionally, a commercial transaction system is known which connects to a network such as Internet using a terminal device such as a personal computer, and which enables commercial transaction such as purchase of a product or reservation to use service through, for example, a webpage provided by, for example, a web server. Such a commercial transaction system lists a banner advertisement on, for example, a webpage which introduces to products. For example, sellers of products can lead viewers to webpages for selling the products of the sellers by way of banner advertisements. Generally, a banner advertisement is created by an advertiser such as a seller of a product. Meanwhile, Patent Literature 1 discloses a technique of extracting features of a link destination webpage of a banner to be displayed, automatically generating image data including display of sentences which represent the extracted features and displaying the generated image data on a web browser of a user terminal as a banner in the webpage.

### Citation List

### Patent Literature

Patent Literature 1: Japanese Patent Application Laid-Open No. 2002-157498

### Summary of the Invention

### Problem to be solved by the Invention

With the technique disclosed in Patent Literature 1, display content of a banner advertisement is limited to information included in a webpage of a link destination. Hence, the display content of the banner advertisement is determined by a provider side (advertisement side) of information included in the webpage. Therefore, the conventional technique including Patent Literature 1 determines display content of a banner advertisement according to the intension of the provider side (advertiser side).

However, for example, a product determined as an advertisement target as described above is not necessarily a product which is recently gaining attention of users or a product which is likely to gain attention. Hence, the conventional technique has limitation in promoting commercial transaction through a network more than ever by means of advertisements listed on webpages.

The present invention is made in light of the above, and an object of the present invention is to provide an information processing device, an information processing method, an information processing program, and a recording medium having the information processing program recorded thereon which promote commercial transaction through a network more than ever.

### Solution to Problem

### Means for solving the Problem

In order to solve the above problem, the invention according to claim 1 is an information processing device which provides display data including an advertisement display area, to a terminal device through a network,
the information processing device comprising:
a posting information acquiring means that acquires posting information registered in a site on the network;
a commercial transaction target specifying means that specifies a commercial transaction target based on the acquired posting information;
an attention degree calculating means that calculates a degree of attention of the commercial transaction target specified based on the acquired posting information; and
an advertisement display target determining means that determines the commercial transaction target which is an advertisement display target based on the calculated degree of attention.
The present invention is configured to calculate a degree of attention of a commercial transaction target based on posting information registered in a site on a network, and determine a commercial transaction target which is an advertisement display target based on the calculated degree of attention.
Therefore, an advertisement display target is not determined in accordance with an intention of a provider side (an advertiser side), and it is possible that a commercial transaction target which recently attracts a site-user's attention or a commercial transaction target which is expected to attract a site-user's attention is made an advertisement display target.
As a result, it is possible to activate a commercial transaction through a network more than before.

The invention according to claim 2 is the information processing device according to claim 1,
further comprising a first setting means that sets information matching a commercial transaction target which is determined as the advertisement display target, as information to be displayed in an advertisement display area.
According to the present invention, it is possible to quickly provide a terminal device with display data for displaying, in an advertisement display area, information corresponding to a commercial transaction target which recently attracts a user's attention or a commercial transaction target which is expected to attract a user's attention.

The invention according to claim 3 is the information processing device according to claim 1 or 2,
wherein the attention degree calculating means calculates the degree of attention based on at least one of elements of a number of posts of the posting information, a number of views of the posting information, a number of replies to the posting information and a number of in-bound links to the posting information.
According to the present invention, it is possible to quickly and efficiently calculate a degree of attention.

The invention according to claim 4 is the information processing device according to claim 1 or 2,
wherein the attention degree calculating means calculates the degree of attention based on a number of followers of a poster of the posting information.
According to the present invention, it is possible to easily determine, as an advertisement display target, a commercial transaction target which has a high possibility of attracting an attention from many people in the future.

The invention according to claim 5 is the information processing device according to claim 1 or 2,
wherein the attention degree calculating means calculates, as the degree of attention, a sum of conversion points stored in advance in association with at least two or more elements of a number of posts of the posting information, a number of views of the posting information, a number of replies to the posting information, a number of in-bound links to the posting information and a number of followers of the posting information.
According to the present invention, it is possible to calculate a degree of attention considering a contribution ration (weighting) of each element. Therefore, it is possible to calculate a highly accurate degree of attention.

The invention according to claim 6 is the information processing device according to claim 1 or 2,
wherein the attention degree calculating means calculates, as the degree of attention, a sum of an evaluation point stored in advance in association with information related to an evaluation for the commercial transaction target included in the posting information.
According to the present invention, it is possible to calculate a degree of attention considering an idea, an attitude, or the like of a posting person for a commercial transaction target. Therefore, it is possible to calculate a highly accurate degree of attention.

The invention according to claim 7 is the information processing device according to any one of claims 1, 3 and 6,
wherein the posting information acquiring means acquires the posting information corresponding to user specifying information which is stored in a user information memory means and which is used to specify a user, from a first site; and
the information processing device comprises:
a second setting means that sets, as information displayed in the advertisement display area, information matching the commercial transaction target determined as the advertisement display target, and that sets link information matching a second site for performing commercial transaction of the commercial transaction target, to the advertisement display area; and
a reward information storing means that, when the commercial transaction is performed through the link information set to the advertisement display area, associates reward information paid for the user associated with the posting information of the commercial transaction target, with the user specifying information, to be stored in the user information memory means.
According to the present invention, it is possible that an affiliator increases a channel from which affiliate' s reward can be obtained, besides a conventional affiliate program.

The invention according to claim 8 is the information processing device according to claim 7,
further comprising a payment target user determining means that, when there are a plurality of users associated with the posting information of the commercial transaction target for which the commercial transaction is performed through the link information, determines a user who is a payment target of the reward based on posting information associated with each of the users.
According to the present invention, even in the case where there are a plurality of users, it is possible to quickly determine a user who is a payment target of reward.

The invention according to claim 9 is the information processing device according to claim 8, further comprising
a reward distribution determining means that, when the payment target user determining means determines a plurality of users who are payment targets of the reward, determines a distribution of reward information paid to each of the determined users based on a degree of contribution of each of the users for the degree of attention for selecting the commercial transaction target as a commercial transaction target.
According to the present invention, it is possible to further increase a posting motivation of a poster.

The invention according to claim 10 is the information processing device according to any one of claims 7 to 9, further comprising
a provider source selecting means that selects one or more provider sources based on at least one of inventory information and price information of the commercial transaction target from a plurality of provider sources whose provider source specifying information is stored in a provider source information memory means that associates and stores at least one of the provider source specifying information for specifying a provider source of the commercial transaction target, and the inventory information and the price information of the commercial transaction target provided from the provider source,
wherein the second setting means sets link information matching a second site for the selected provider source to perform the commercial transaction of the commercial transaction target, to the advertisement display area.
According to the present invention, for a user who reviews information corresponding to the determined commercial transaction target, it is possible to quickly perform a commercial transaction of a commercial transaction target by a provider who provides a commercial transaction target at the lowest price or a provide who surely keeps a commercial transaction target in stock among a plurality of providers.

The invention according to claim 11 is the information processing device according to any one of claims 7 to 10,
wherein the advertisement display target determining means determines a plurality of commercial transaction targets as the advertisement display target based on the posting information of the specified commercial transaction target; and
the second setting means sets information matching each of the commercial transaction targets, to the advertisement display area divided by a number corresponding to a number of the determined commercial transaction targets.
According to the present invention, it is possible to determine a plurality of commercial transaction targets, and display their information in an advertisement display area.

The invention according to claim 12 is the information processing device according to any one of claims 7 to 10,
wherein a size of the advertisement display area is set in advance;
the information processing device further comprises an advertisement display area changing means that enlarges or reduces the size of the advertisement display area based on the posting information of the specified commercial transaction target; and
the second setting means sets information matching the commercial transaction target, to the advertisement display area whose size is enlarged or reduced.
According to the present invention, it is possible to flexibly change a size of an advertisement display area in accordance with an advertisement fee and so on used for setting information corresponding to a commercial transaction target in an advertisement display area.

The invention according to claim 13 is the information processing device according to any one of claims 1 to 12, further comprising
a control means that causes a part or all of processes performed by the posting information acquiring means, the commercial transaction target specifying means, the attention degree calculating means and the advertisement display target determining means to be executed per predetermined time period.
According to the present invention, it is possible to change information corresponding to a commercial transaction target to be displayed in an advertisement display area, per a predetermined period of time.

The invention according to claim 14 is the information processing device according to any one of claims 1 to 12, further comprising
a control means that causes a part or all of processes performed by the posting information acquiring means, the commercial transaction target specifying means, the attention degree calculating means and the advertisement display target determining means to be executed when at least a number of posts of the posting information to the site exceeds a threshold.
According to the present invention, it is possible to flexibly change information corresponding to a commercial transaction target to be displayed in an advertisement display area, in accordance with a number of posts.

The invention according to claim 15 is the information processing device according to any one of claims 1 to 12, further comprising
a control means that causes a part or all of processes performed by the posting information acquiring means, the commercial transaction target specifying means, the attention degree calculating means and the advertisement display target determining means to be executed when a specifying count of the advertisement display area exceeds a threshold.
According to the present invention, it is possible to flexibly change information corresponding to a commercial transaction target to be displayed in an advertisement display area, in accordance with a specifying count.

The invention according to claim 16 is the information processing device according to any one of claims 1 to 15, further comprising
an advertisement display area determining means that determines the advertisement display area for displaying information matching the determined commercial transaction target, based on the calculated degree of attention.
According to the present invention, it is possible to determine an advertisement display area of a proper size, a proper position, or the like, in accordance with a degree of attention.

The invention according to claim 17 is the information processing device according to any one of claims 2 to 16,
wherein the first setting means or the second setting means sets information matching the commercial transaction target determined as the advertisement display target, as information to be displayed in the advertisement display area, only when the calculated degree of attention is higher than a threshold.
According to the present invention, by setting, as an advertisement display target, only information of a product whose degree of attention is equal to or higher than a certain value, it is possible to, for example, exclude a product for which there is a possibility of not recovering in business, from an advertisement display target.

The invention according to claim 18 is the information processing device according to any one of claims 1 to 6, further comprising
an advertisement display data generating means that generates advertisement display data of the commercial transaction target based on posting information matching a commercial transaction target determined as the advertisement display target.
According to the present invention, it is possible to generate advertisement display data with high customer appeal which flexibly reflects a user's view and so on posted for a commercial transaction target which is popular or to which an attention is drawn among users on a network.

The invention according to claim 19 is the information processing device according to claim 18,
wherein the posting information acquiring means acquires, from the site, the posting information corresponding user specifying information which is stored in a user information memory means and which is used to specify a user.
According to the present invention, it is possible to generate advertisement display data of a commercial transaction target based on posting information posted by the specified user.

The invention according to claim 20 is the information processing device according to claim 18 or 19,
wherein the advertisement display target determining means determines, as the advertisement display target, a commercial transaction target registered in a candidate list of commercial transaction targets which are advertisement display target candidates stored in a candidate list memory means among commercial transaction targets specified by the commercial transaction target specifying means.
According to the present invention, it is possible to, for example, determine a commercial transaction target for which a commercial transaction is desired to be performed at a business person side.

The invention according to claim 21 is the information processing device according to claims 18 to 20,
wherein the advertisement display data generating means extracts a characteristic character string from text information included in the posting information matching the commercial transaction target, and generates advertisement display data for displaying the extracted character string.
According to the present invention, it is possible to generate advertisement display data which is composed of characteristic character string posted by a user, so it is possible that a viewer is interested therein.

The invention according to claim 22 is the information processing device according to claims 18 to 21, further comprising:
a screen data generating means that generates screen data including an advertisement display area to which the generated advertisement display data is set; and
a transmitting means that transmits the generated screen data to a terminal device which is accessed through a network.
According to the present invention, it is possible to cause a terminal device to display advertisement based on the generated advertisement display data.

The invention according to claim 23 is the information processing device according to claim 22, further comprising
a display control means that compares the advertisement display area of the display data and a pointer position of a pointing device in the display data, and displays additional information related to the commercial transaction target matching the advertisement display data, on the screen data, based on the comparison result.

The invention according to claim 24 is an information processing method executed by a computer which provides screen data including an advertisement display area, to a terminal device through a network,
the information processing method comprising:
a step of acquiring posting information registered in a site on the network;
a step of specifying a commercial transaction target based on the acquired posting information;
a step of calculating a degree of attention of the commercial transaction target specified based on the acquired posting information; and
a step of determining the commercial transaction target which is an advertisement display target based on the calculated degree of attention.

The invention according to claim 25 is an information processing program (a computer-readable program) causing a computer that provides screen data including an advertisement display area, to a terminal device through a network, to function as:
a posting information acquiring means that acquires posting information registered in a site on the network;
a commercial transaction target specifying means that specifies a commercial transaction target based on the acquired posting information;
an attention degree calculating means that calculates a degree of attention of the commercial transaction target specified based on the acquired posting information; and
an advertisement display target determining means that determines the commercial transaction target which is an advertisement display target based on the calculated degree of attention.

The invention according to claim 26 is a recording medium having an information processing program recorded thereon that causes a computer that provides screen data including an advertisement display area, to a terminal device through a network, to function as:
a posting information acquiring means that acquires posting information registered in a site on the network;
a commercial transaction target specifying means that specifies a commercial transaction target based on the acquired posting information;
an attention degree calculating means that calculates a degree of attention of the commercial transaction target specified based on the acquired posting information; and
an advertisement display target determining means that determines the commercial transaction target which is an advertisement display target based on the calculated degree of attention.

### Advantageous Effects of Invention

The present invention is configured to calculate the degree of attention of a commercial transaction target based on posting information registered in a site on a network and determine a commercial transaction target which is an advertisement display target based on the calculated degree of attention, so that it is possible to determine as an advertisement display target or a commercial transaction target which is recently gaining attention of users of a site or a commercial transaction target which is likely to gain an attention instead of determining the advertisement target according to an intension of a provider (advertiser) and, consequently, promote commercial transaction through the network more than ever.

### Brief Explanation of the Drawings

Fig. 1 is a view illustrating an example of a schematic configuration of an information providing system S according to the present embodiment.
Fig. 2 is a block diagram illustrating a schematic configuration example of an information providing server 3 according to the present embodiment.
Figs. 3A to 3C are views illustrating a configuration example of information registered in each database.
Fig. 4 is a view illustrating an example of information registered in a posting information database 323.
Fig. 5 is a flowchart illustrating processing of determining an advertisement display target product and setting advertisement content in a system control unit 33 of the information providing server 3.
Fig. 6 is a view illustrating an example of a table for converting a score calculation element into a conversion point.
Fig. 7A is a view illustrating an example of an advertisement display area in a webpage. Fig. 7B is a view illustrating an example of a score range table which defines a score range which is necessary to display advertisement content in each advertisement display area.
Fig. 8A is a flowchart illustrating processing upon reception of a page request in the system control unit 33 of the information providing server 3. Fig. 8B is a flowchart illustrating processing upon reception of a product purchase request in the system control unit 33 of the information providing server 3.
Fig. 9 is a flowchart illustrating advertisement display data generation processing in the system control unit 33 of the information providing server 3.

### Mode for carrying out the Invention

Hereinafter, an embodiment of the present invention will be described with reference to the drawings. In addition, the embodiment will be described below where the present invention is applied to an information providing system.

### [1. Outline of Configuration and Function of Information Providing System]

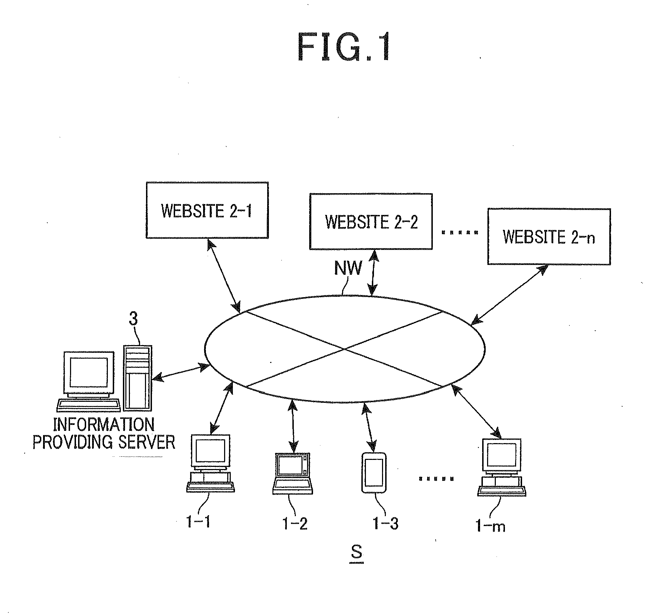

First, an outline of a configuration and a function of an information providing system S according to an embodiment of the present invention will be described using Fig. 1.

Fig. 1 is a view illustrating an example of a schematic configuration of the information providing system S according to the present embodiment. As illustrated in Fig. 1, the information providing system S has a plurality of user terminals 1-j (j = 1, 2, ... m), a plurality of websites 2-k (k = 1, 2, ... n) and an information providing server 3 (an example of an information processing device).

The user terminals 1-j, the websites 2-k and the information providing server 3 can transmit and receive data to and from each other using, for example, TCP/IP for a communication protocol through a network NW. In addition, the network NW is constructed by, for example, the Internet, a dedicated communication line (CATV (Community Antenna Television) line), a mobile communication network (including, for example, base stations) and a gateway.

The user terminal 1-j has a web browser function, and acquire a webpage (an example of display data configuring a display screen) by accessing the website 2-k or the information providing server 3 through a web browser and display the webpage in a window screen which appears on the display. In addition, as the user terminal 1-j, for example, a personal computer (PC), a mobile telephone, a mobile information terminal (PDA: Personal Digital Assistants), a mobile terminal (Smartphone) which combines the mobile telephone and the mobile information terminal and a mobile game machine are applicable. In addition, an operation unit for receiving an operation instruction from a user of the user terminal 1-j may be a keyboard, a mouse, a remote controller and a touch panel interface and the like.

The website 2-k is configured by, for example, a web server, an application server and a database server. Such websites 2-k is a site (an example of a first site) which associates and registers a webpage displayed on a window screen of the user terminal 1-j and posting information posted (inputted or selected on a webpage) by a user (poster) through the webpage, and user specifying information (for example, a user ID) for specifying the user (poster). Such website 2-k includes a blog site, an SNS (Social Networking Service) site (a community site), a mini blog site (TWITTER (registered trademark) site), a review site, a word-of-mouth site, a product merchandising site (shopping site), a travel reservation site, an accommodation reservation site, a facility use reservation site. Note that URL (Uniform Resource Locator) of each site is different from each other.

Meanwhile, posting information includes, for example, information such as an article, a comment, a word, a tweet, a word of mouth, a review and an evaluation (point) on a commercial transaction target. The commercial transaction target is a commercial transaction target such as a product or service (service such as a trip, an accommodation, beauty or a play facility). In addition, a product will be mainly used as an example and described below.

An article, a comment, a word, a tweet, a word of mouth and a review which are examples of posting information are generally character strings inputted when, for example, the user operates an operation key, and is accompanied by an image in some cases. Further, an evaluation is generally a point selected by the user by operating the mouse (or performing a tapping operation on the touch panel) from points classified into a plurality of (for example, 5) levels. Furthermore, when posting information is a word of mouth or a review registered in, for example, a review site, a word-of-mouth site or a product merchandising site, information such as the words of mouth of other users or the number of views of a review is included in the posting information. Still further, when posting information is an article registered in a blog site, the posting information includes information such as the number of other users' views of the article, the number of the other users' replies (the number of other users' comments) to the article, the number of in-bound links (the number of links) (determined by a known referrer) to the article by the other users and the number of in-bound trackbacks (the number of trackbacks) to the article by the other users. Moreover, when posting information is a tweet registered in a mini blog, the posting information includes information such as the number of other users' views of the tweet, the number of followers of the tweet, the number of retweets of the tweet and the number of in-bound links to the tweet by the other users. In addition, the number of followers is the number of other users (followers) who are following (the tweet is automatically sent to the followers) . Further, the number of retweets is the number of times of the tweet cited and posted by the other users. In addition, posting information may include the number of transferred customers (a customer transfer source user is decided by, for example, a query string) from, for example, a mail magazine distributed to multiple users. The above posting information is acquired by the information providing server 3.

Next, the information providing server 3 is formed with one or a plurality of server computers which each have a function of, for example, a web server, an application server and a database server to configure an information providing site. This information providing site may be a blog site, an SNS site, a mini blog site, a word-of-mouth site, a product merchandising site (shopping site), a trip reservation site, an accommodation reservation site or a facility use reservation site. Further, for example, this information providing site may be included in a website 2-1 among the websites 2-k or may be a website associated with the website 2-1 (for example, run by the same service provider).

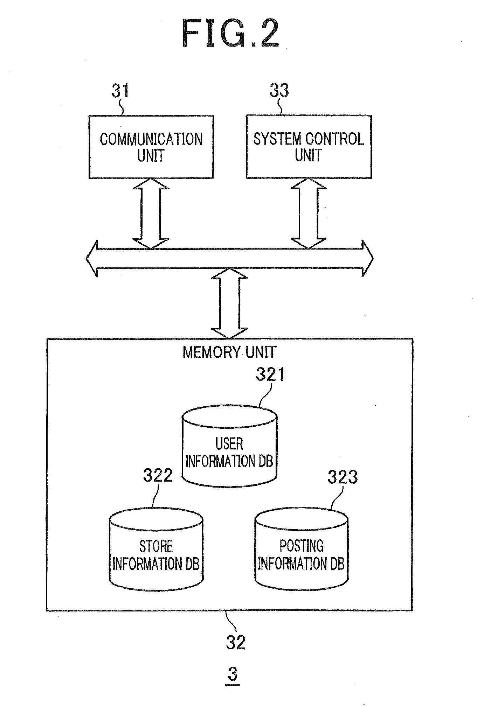

Fig. 2 is a block diagram illustrating a schematic configuration example of the information providing server 3 according to the present embodiment.

As illustrated in Fig. 2, the information providing server 3 has, for example, a communication unit 31, a memory unit 32 and a system control unit 33.

The communication unit 31 connects to the network NW to control a communication state between the user terminals 1-j and the websites 2-k.

The memory unit 32 is configured to include, for example, a hard disk drive, and stores an operating system and an application program (including, for example, an information processing program according to the present invention). In addition, the information processing program according to the present invention may be downloaded from, for example, another server through the network NW, or may be recorded in a recording medium such as a CD-ROM and read through a drive.

Further, in the memory unit 32, a structured document (for example, HTML (Hyper Text Markup Language) document or XHTML document) file configuring a webpage (an example of screen data including an advertisement display area) for displaying various items of content, and an image file are stored. Each content arranged in a webpage is configured by, for example, at least one of a text, a still image and a movie. Further, the items of content include various items of content such as an original content (for example, content including a search result in the Internet market) which users desire, and advertisement content (referred to as "advertisement content" below) such as a banner. A size and an arrangement position of each content in a webpage are defined in the above structured document.

Further, with the present embodiment, a product which is an advertisement display target as advertisement content is dynamically determined based on the above posting information as described below. Furthermore, advertisement display data for displaying the advertisement content of the product is generated based on posting information matching a product determined as the advertisement display target. Still further, in the advertisement display area of a webpage which displays advertisement content, link information (including, for example, a URL of the product purchase procedure page) to a webpage (referred to as "product purchase procedure page" below) for performing purchase procedure (commercial transaction) of the determined product, or a webpage (referred to as a "product introduction page" below) for introducing the determined product and a store which sells this product is set. Still further, with the present embodiment, this link information (an example of link information matching the second site for performing commercial transaction) may be, for example, an affiliate link and, when purchase payment is performed for the product through the affiliate link, a result reward (referred to as an "affiliate reward" below) of an affiliate is paid to a poster (a user of the website 2-k) associated with posting information of the product. In addition, with the present embodiment, a point (an example of reward information) is given to a user as an affiliate reward. In addition, the affiliate reward is not limited to a point, and may be electronic money, a discount coupon ticket or a service ticket.

Further, in the memory unit 32, a user information database (DB) 321 (an example of a user information memory means), a store information database (DB) 322 (an example of a provider source information memory means) and a posting information database (DB) 323 are constructed.

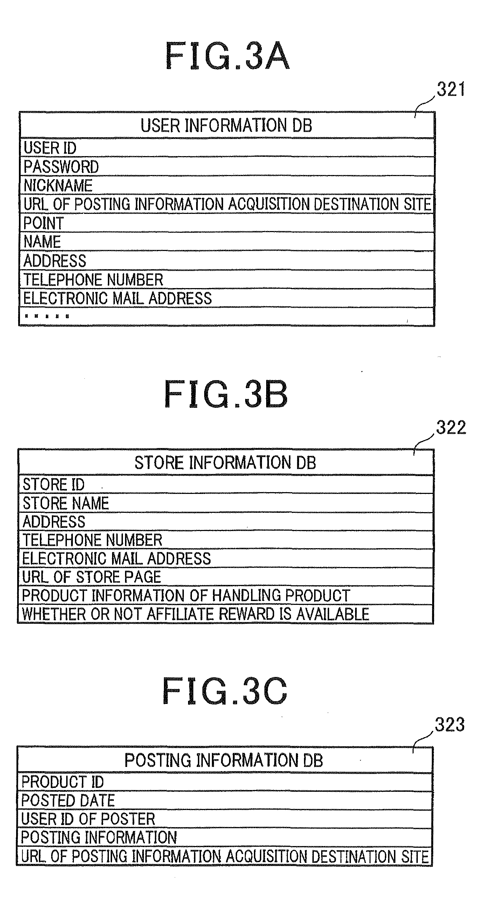

Figs. 3A to 3C are views illustrating a configuration example of information registered in each database.

In the user information database 321 illustrated in Fig. 3A, user information such as a user ID (user identification information) of a user registered in an affiliate program, a password, a nickname, a URL of a posting information acquisition destination site, a point (given point), a name, an address, a telephone number and an electronic mail address are associated per user and registered.

Meanwhile, the user ID is an example of user specifying information for specifying a user. In addition, the user specifying information may be any information such as a nickname or a log-in ID as long as the information enables the user to be specified. A URL of the posting information acquisition destination site is a URL of the website 2-k specified by the user as an acquisition destination of posting information (this URL is not registered depending on a user in some cases). Further, when the posting information acquisition destination site is the website 2-k which the user is required to log in to use, the user ID of the user (which may be the same as or different from the user ID of a user registered in the affiliate program) which is used for log-in and a password are also associated with the URL of the posting information acquisition destination site and registered in the user information database 321.

Furthermore, a point (given point) registered in the user information database 321 is given to a user according to payment of product purchase or service reservation, or is given to a user as the affiliate reward. The user can allocate the given point to all or part of the payment upon payment of product purchase or service reservation.

In the store information database 322 illustrated in Fig. 3B, store information such as a store ID of a store listed and registered in the Internet market provided from the information providing server 3, a store name, an address, a telephone number, an electronic mail address, a URL of a store page, product information of handling products and whether or not affiliate reward payment is available is associated per store and registered. Meanwhile, the store ID is an example of provider source specifying information for specifying a store which is a provider source of a product. The product information of a handling product includes, for example, a product ID of each product sold at a store, a product name, a product code (for example, a JAN code), product description (for example, a product specification and product features), product image data, sales price information, inventory information and information as to whether or not affiliate reward payment is available. Product information of a product which can be paid by an affiliate reward includes, for example, the rate (for example, 1%) of the affiliate reward.

In the posting information database 323 illustrated in Fig. 3C, information such as a product ID of each product, a posted date, a user ID of a poster, posting information, and a URL of the posting information acquisition destination site (website 2-k) is associated and registered. In addition, information registered in the posting information database 323 may be configured to be associated with a user ID and registered in the user information database 321.

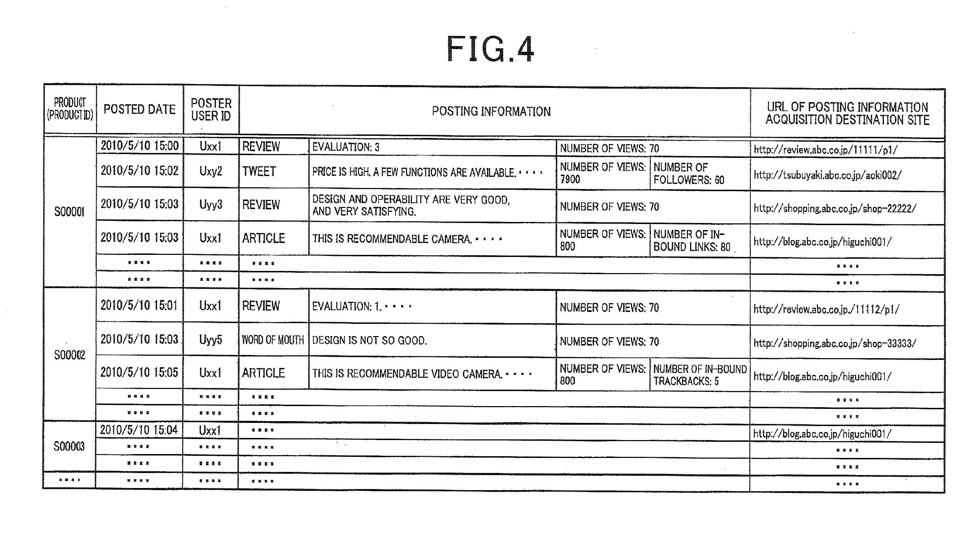

Fig. 4 is a view illustrating an example of information registered in the posting information database 323.

With an example illustrated in Fig. 4, a plurality of records (1 record = 1 row with an example in Fig. 4) are registered for one product (for example, a product ID is "S00001"). It is possible to calculate the number of posts per product by counting the number of records. Further, posting information illustrated in Fig. 4 includes information such as an article, a tweet, a word of mouth, a review, an evaluation and the number of views, and, in addition, a posted date (a posted date and time with this example). Although not illustrated, posting information includes image data in some cases.

The system control unit 33 has, for example, a CPU (Central Processing Unit), a ROM (Read Only Memory) and a RAM (Random Access Memory). Further, when the CPU reads and executes various programs stored in the ROM or the memory unit, the system control unit 33 functions as, for example, a posting information acquiring means, a commercial transaction target specifying means, an attention degree calculating means, an advertisement display target determining means, a first setting means, a second setting means, a reward information storing means, a payment target user determining means, a reward distribution determining means, a provider source selecting means, an advertisement display area changing means, a control means, an advertisement display area determining means, an advertisement display data generating means, a screen data generating means, a transmitting means and a display control means according to the present invention, and performs processing which will be described below.

### [2. Operation of Information Providing System S]

Next, an operation of the information providing system S according to the present embodiment will be described.

### (2.1. Operation of Determining Advertisement Display Target Product and Setting Advertisement Content)

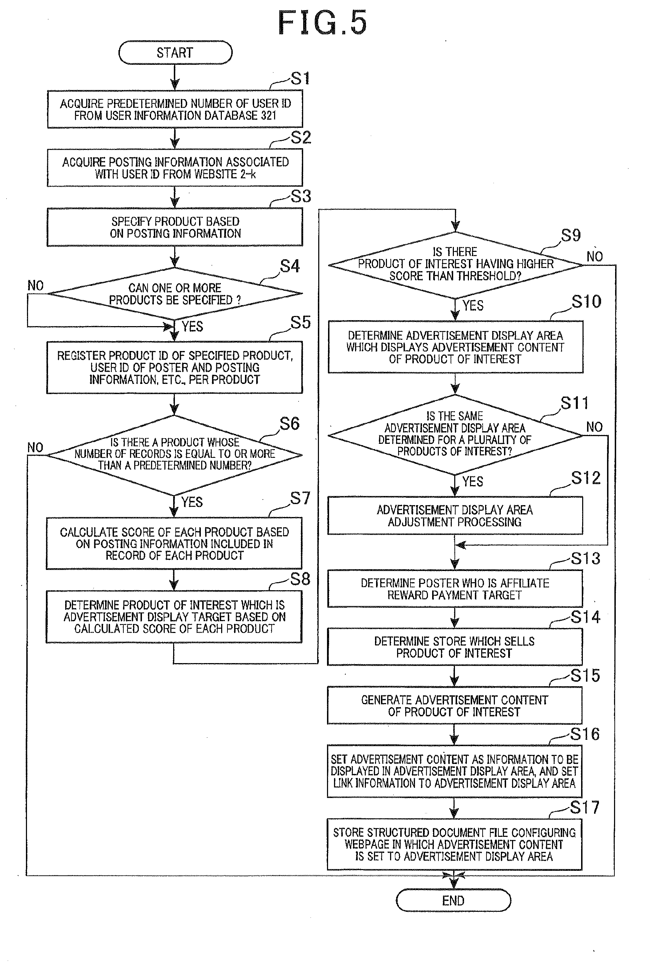

First, an operation of determining an advertisement display target product and setting advertisement content will be described using Fig. 5.

Fig. 5 is a flowchart illustrating processing of determining an advertisement display target product and setting advertisement content in the system control unit 33 of the information providing server 3.

This processing of determining an advertisement display target product and setting advertisement content is started when predetermined trigger conditions are satisfied. In addition, the trigger conditions will be described below.

When the processing illustrated in Fig. 5 is started, the system control unit 33 acquires a predetermined number (or all) of user IDs from the user information database 321 (step S1) . In addition, the system control unit 33 may be configured to acquire only a user ID of a specific user determined in advance.

Next, the system control unit 33 acquires posting information associated with each acquired user ID among posting information registered in the websites 2-k (only when posting information associated with user IDs is registered) (step S2). For example, the system control unit 33 sets in advance URLs of one or more websites 2-k which are acquisition destinations of posting information, accesses the websites 2-k according to the URLs and acquires posting information associated with each user ID from web servers of the websites 2-k. In addition, a configuration may be employed where a user ID is not acquired in above step S1 and, in this case, in above step S2, posting information is acquired irrespectively of a user ID.

Further, when a URL of a posting information acquisition destination site is associated with each acquired user ID and registered, the system control unit 33 accesses the website 2-k according to the URL and acquires posting information associated with each user ID from the web server of the website 2-k. In this case, when the posting information acquisition destination site is the website 2-k which a user is required to log in to use, the system control unit 33 logs in the website 2-k using a user ID and a password registered in association with the URL of the posting information acquisition destination site, and acquires posting information associated with each user ID from the web server of the website 2-k.

Alternatively, a configuration may be employed where, when processing illustrated in Fig. 5 is started in response to a request for a webpage or an update request for advertisement content from the user terminal 1-j of the user who logged in the information providing site, the system control unit 33 accesses the website 2-k according to the URL of the posting information acquisition site registered in association with the user ID of the user who logs in the information providing site, and acquires posting information associated with each user ID from the web server of the website 2-k. In this case, it is possible to acquire posting information only from the website 2-k specified by the user who logged in the information providing site. In addition, when the user ID and the password are registered in association with the URL of the posting information acquisition destination site, there is a case where the system control unit 33 acquires posting information after logging in the website 2-k using the user ID and the password.

As described above, posting information including, for example, an article, a comment, a tweet, a word of mouth, a review or an evaluation is acquired from, for example, a blog site, a mini blog site, a review site, a word of mouth site and a product merchandising site. Next, the system control unit 33 performs processing of specifying a product from, for example, the store information database 322 based on the acquired posting information (step S3). When, for example, a product name or a product code is extracted from a character string related to posting information, and the extracted product name or product code is registered in the store information database 322 (that is, product information of a handling product is included), a product (product ID) associated with the product name or the product code is specified. Alternatively, in case of a webpage in which a user inputs, for example, a review of a product set in advance in an entry field, if a product name or a product code described in association with the entry field of the webpage is extracted, a product associated with the product name or the product code is specified, and is assigned a product ID. Further, when a product name or a product code described in association with the entry field of the webpage is extracted and the extracted product name or product code is registered in the store information database 322, a product (product ID) associated with the product name or the product code is specified. In addition, a product may be specified by referring to a database (for example, a database in which information about an unreleased product is registered) other than the store information database 321.

Next, the system control unit 33 determines whether or not one or more products are specified in above step S3 (step S4) . Further, when one or more products are specified (YES in step S4), the system control unit 33 associates information such as a product ID of the specified product, a user ID of the poster, posting information and a URL of an acquisition destination site of the posting information per product (per record) to register in the posting information database 323 (step S5), and proceeds to step S6. In addition, a user ID of a poster is not registered in some cases. Meanwhile, when a product ID, a user ID, a posted date and a character string included in a newly registered record, and a product ID, a user ID, a posted date and a character string included in a record already registered in the posting information database 323 are identical, the record which is already registered is updated (for example, overwritten) with the new record (in this case, updated when, for example, the number of views included in the record has changed) . Meanwhile, when no product can be specified (NO in step S4), the system control unit 33 proceeds to step S6 as is.

Next, in step S6, the system control unit 33 refers to the posting information database 323, extracts a record of a product of which posted date is in a period between a current point of time and a point of time which is a predetermined period before in the past (for example, one week) (for example, a product for which posting information was posted within recent one week), and determines whether or not there is a product of which number of extracted records is a predetermined number (for example, 10) or more. Further, the system control unit 33 proceeds to step S7 when determining that there is a product of which number of extracted record is a predetermined number or more (YES in step S6), and finishes processing illustrated in Fig. 5 when determining that there is not a product of which number of extracted records is less than a predetermined number (NO in step S6) . This step S6 enables a product which recently is gaining attention of users to some degree to be extracted. When, for example, the number of records of a product α is 100 in total, and the number of records of which posted dates are within a period T is 10 (which satisfies conditions that the number of records is the predetermined number or more), 10 records of this product a are extracted and used in processing subsequent to step S7 (in other words, records posted in the past prior to this period T are excluded from the extraction target). Meanwhile, when, for example, the number of records of the product a is 100 in total and the number of records of which posted dates are within the period T is 9 (which does not satisfy the conditions that the number of records is the predetermined number or more), the records of this product a, are not used in the processing illustrated in Fig. 5. In addition, a configuration may be employed where, in processing of this step S6, all records registered in the posting information database 323 in the past are extracted irrespectively of a period between the current point of time and a point of time which is a predetermined time before in the past.

Next, in step S7, the system control unit 33 calculates a score as the degree of attention of each product based on posting information included in the extracted record of each product per product (product ID) of which number of records is the predetermined number or more. Methods of calculating this score include, for example, following (a) to (d).

In addition, in calculation of this score, the number of posts about a product, the number of views, the number of replies, the number of in-bound links, the number of in-bound trackbacks, the number of followers and the number of retweets are referred to as a "score calculation element", respectively. When the numbers indicated in these score calculation elements are greater, it may be said that a product is gaining attention. Meanwhile, the number of posts on a product is obtained by counting the number of extracted records of the product per product. For example, the number of posts on a product of a product ID "S00001" illustrated in Fig. 4 is the number of records including the product ID. Further, the number of replies to the product is obtained by summing up the number of replies included in each extracted record of the product per product. For example, the number of replies to the product of the product ID "S00001" illustrated in Fig. 4 is the sum of each number of replies included in each record including the product ID (the same applies to the number of in-bound links, the number of in-bound trackbacks, the number of follows and the number of retweets).

(a) Calculation Method Using Score Calculation Elements In this case, the system control unit 33 calculates as a score one score calculation element selected in advance (for example, one element of the number of posts, the number of views, the number of replies, the number of in-bound links and the number of followers) or the sum of a plurality of selected score calculation elements (for example, the sum of the number of posts and the number of views. The sum of other two or more elements may be used). Alternatively, each of a plurality of score calculation elements selected in advance may be calculated as a score (in this case, for example, the number of posts is a first score, and the number of views is a second score). Meanwhile, although any score calculation element may be selected, some elements cannot be obtained depending on a type of posting information (a type such as an article, a comment, a word, a tweet, a word of mouth, a review or an evaluation), and therefore the number of posts or the number of views which can be obtained from any type is desirably selected. According to the calculating method (a), it is possible to quickly calculate a score. By the way, when a celebrity is a poster, the number of followers of this poster (the number of users following this poster) is up to several thousand or tens of thousands. Hence, when the number of followers or the sum of each score calculation element including the number of followers is calculated as a score, a score (the degree of attention) of a product for which the celebrity is the poster rises instantly. As described above, a method of calculating a score using the number of followers is effective to give a varying inflation per poster, so that it is possible to increase a score of a product which is highly likely to gain attention from a lot of people in the future (that is, a celebrity is paying attention to the product and so other people are also highly likely to pay attention to the product) (as a result, the product is easily determined as a product of interest in step S8 described below).

In addition, according to a configuration where, for example, a greater weighting coefficient (for example, 2) than those of other score calculation elements is multiplied on a score calculation element of, for example, the number of views obtained based on posting information acquired from a popular blog page at a higher rank in an access ranking or a blog page of a blogger set in advance (a weighting coefficient "1" is multiplied on a score calculation element obtained based on posting information acquired from a normal webpage), and the sum of score calculation elements is calculated, it is possible to calculate a precise score. Further, according to a configuration where, for example, a greater weighting coefficient (for example, 2) than those of other records is multiplied on a record including posting information acquired from a popular blog page at a higher rank in an access ranking or a blog page of a blogger set in advance, and records are counted (that is, the record multiplied with the greater weighting coefficient than those of the other records is counted twice), it is possible to calculate a high score for the number of posts.

### (b) Calculation Method Using Conversion Point of Score Calculation Element

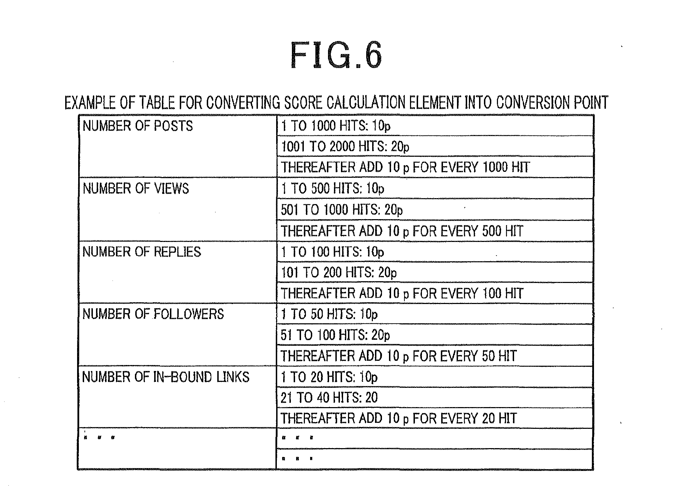

In this case, the system control unit 33 calculates as a score the sum of conversion points of each of a plurality of selected score calculation elements. Fig. 6 is a view illustrating an example of a table for converting a score calculation element into a conversion point. As illustrated in Fig. 6, the number of hits required to obtain the same conversion point is different per score calculation element. To obtain 20 p (points), for example, "1001 to 2000 hits" is required for the number of posts, and "21 to 40 hits" is required for the number of in-bound links. The system control unit 33 converts each selected score calculation element into a conversion point referring to the conversion table stored in, for example, the RAM, and calculates the sum of the converted conversion points as the score. According to the calculating method (b), a score is calculated by taking into account a contribution rate (weight) of each score calculation element to the degree of attention to a product, so that it is possible to calculate a precise score.

In addition, according to a configuration where, for example, a greater weighting coefficient (for example, 2) than those of other conversion points is multiplied on a conversion point obtained based on posting information acquired from a popular blog page at a higher rank in an access ranking or a blog page of a blogger set in advance (a weighting coefficient "1" is multiplied on the conversion point obtained based on posting information acquired from a normal webpage), and the sum of each conversion point is calculated, it is possible to calculate a more precise score.

### (c) Calculation Method Using Content of Posting Information

In this case, the system control unit 33 calculates as a score the sum of evaluation points obtained based on at least one of an evaluation (point) and a character string (an example of information related to an evaluation on a commercial transaction target) included in posting information. In case of an evaluation, a point which reflects the evaluation as is or a point which is obtained by multiplying a point with a predetermined coefficient is obtained as an evaluation point. Meanwhile, in case of a character string, when a word (or sentence) registered in a predetermined word list is included in the character string, an evaluation point matching the word is obtained from the word list. In this word list, for example, positive words and negative words are registered, and, while a plus evaluation point is associated with the positive words, a minus evaluation point is associated with the negative words. For example, examples of positive words and evaluations points are "operability is good → evaluation point: +2", "very satisfied → evaluation point : +3", and "recommendable ... → evaluation point: +3", and evaluation points associated per word are different (the same also applies to a sentence). Meanwhile, examples of negative words and evaluation points are "price is high → evaluation point: -1", "few functions → evaluation point: -1" and "not so good → evaluation point: -2", and evaluation points associated per word are different. In addition, posting information is expressed by various people, and some words are positive and negative depending on connection (modification relation) of preceding and subsequent words. For example, while "not good" in a sentence "sound quality is not good" is evaluated as negative words, "good, isn't it?" in a sentence "sound quality is good, isn't it?" can be evaluated as positive words in some cases because "?" is added. Hence, it is more effective to employ a configuration of performing polar characteristic discrimination as to negative or positive to be learned, and sorting words registered in the word list to positive and negative (that is, the polar characters of words registered in the word list are not fixed and are allowed to fluctuate according to learning). In addition, a known technique is applicable to the above polar characteristic discrimination and therefore will not be described. Further, the system control unit 33 divides a character string included in posting information of a record into a word of a predetermined length (for example, a morpheme (a minimum unit of a language having a meaning)) by, for example, morpheme analysis, checks whether or not the word or a combination of words is registered in the word list and, when the word or the combination is registered, obtains a corresponding evaluation point from the word list (extracts per extracted record). In addition, when a plurality of words registered in the word list are included in a character string included in posting information in one record, the sum of evaluation points matching each word (further, when an evaluation is also included in posting information, a point matching the evaluation is added) is obtained as an evaluation point matching the record. Further, when no word registered in the word list is included in a character string included in posting information in one record, the evaluation point matching the record is "0". Furthermore, the system control unit 33 calculates a score by summing an evaluation point matching each record per product. According to the calculating method (c), the score is calculated by taking into account, for example, an opinion or a feeling on a product of a poster, so that it is possible to calculate a more precise score.

In addition, according to a configuration where, for example, a greater weighting coefficient (for example, 2) than those of the other evaluation points is multiplied on an evaluation point obtained based on posting information acquired from a popular blog page at a higher rank of an access ranking or a blog page of a blogger set in advance (a weighting "1" is multiplied on an evaluation point obtained based on posting information acquired from a normal webpage), it is possible to calculate a more precise score.

### (d) Calculation Method Using Growth rate in Score Calculation Element

In this case, the system control unit 33 calculates as a score a growth rate of one score calculation element selected in advance in a predetermined period (for example, five days) or the sum of a plurality of growth rates selected in advance in a predetermined period. Meanwhile, the growth rate is calculated (by multiplying with 100a value obtained by dividing the number of posts on the first day of the predetermined period by the number of posts on the final day)%. According to the calculating method (d), the score is calculated taking into account the growth rate of, for example, the number of posts, so that it is possible to calculate a more precise score.

In addition, a configuration may be employed where the sum of scores obtained according to one of a plurality of above calculating methods (a) to (d) (for example, the calculating method (a) and the calculating method (c) are desirable) is calculated as the final score to obtain a more precise score. In this case, by multiplying the score obtained according to each calculating method by a weighting coefficient matching the degree of importance and calculating as the final score the sum of the scores, it is possible to obtain a more precise score. In addition, a configuration may be employed where scores are calculated according to a calculating method other than the above calculating methods (a) to (d).

After the score is calculated as described above, the system control unit 33 determines (determines using a product ID) a product (referred to as "product of interest" below) which is an advertisement display target, based on the calculated score of each product (step S8). For example, the system control unit 33 compares the score of each product, sorts the score in order from the highest score, determines the score ranking, and determines products from the first rank (the highest score) to a predetermined rank order in the score ranking as products of interest (relative evaluation). Alternatively, the system control unit 33 compares the score of each product and a threshold, and determines a product having the score equal to or more than the threshold as a product of interest (absolute value). In addition, to determine a product as a product of interest, conditions may be adopted that the product is registered in an advertisement target candidate list (for example, a recommended product list or a list of products for sale (for example, clearance sale)) created on an operator side of the information providing server 3.

Meanwhile, a configuration may be employed where, when the score of each selected score calculation element (for example, the first score or the second score) is calculated according to the calculating method (b), the system control unit 33 determines a ranking per score of each score calculation element, then calculates the sum (or an average) of respective rank orders in the ranking per product, compares the sums of the rank orders, sorts the sums of the rank orders from the highest sum and determines a ranking of the sums of the rank orders. In this case, products from the first rank to a predetermined rank order in the ranking of the sums of the rank orders are determined as products of interest. When, for example, the rank order of the score of the number of posts with respect to a product of the product ID "S00001" is the first rank and the rank order of the score of the number of views is the third rank, the sum of rank orders is "4" (the average is 2). Alternatively, a configuration may be employed where a product having the sum of the rank orders equal to or less than the threshold is determined as a product of interest.

In addition, the product ID of the determined product of interest and the score of the product of interest are associated and stored in, for example, the RAM.

Next, the system control unit 33 determines whether or not there is a product of interest having the score calculated in above described step S8 higher than a threshold (for example, 100) (step S9). According to this processing, only a product of interest having the degree of attention higher than the threshold becomes an advertisement display target, and advertisement content of the product of interest is set to the advertisement display area in step S16 described below. This is to remove the product from the advertisement display target even if the product of a higher rank in the score ranking but the cost is not likely to be recovered from a business perspective. Hence, such a threshold is set based on, for example, cost performance. An example of cost performance includes comparison between "a distribution increase amount/increase amount of money of a product" and "an advertisement unit price", comparison between "an affiliate profit estimated amount" and "an advertisement unit price" or comparison between "an increase amount of money of an advertisement price unit based on an increase in the number of PVs (Page Views) /UUs (Unique Users) " and "an advertisement unit price", and a threshold is set based on the comparison result.

Further, the system control unit 33 determines (determines using the product ID) the product of interest as an advertisement display target and proceeds to step S10 when determining that there is a product of interest having the score higher than the threshold (YES in step S9), and finishes the processing illustrated in Fig. 5 when determining that there is no product of interest having the score higher than the threshold (NO in step S9). In addition, processing in above step S9 may not be performed and, when this processing is not performed, step S8 transitions to step S10.

Next, in step S10, the system control unit 33 determines an advertisement display area (an advertisement display area in a webpage) which displays advertisement content of the determined product of interest, based on the score calculated in above step S8. For example, the advertisement display area having the size or an arrangement position matching the score calculated in above step S8 is determined.

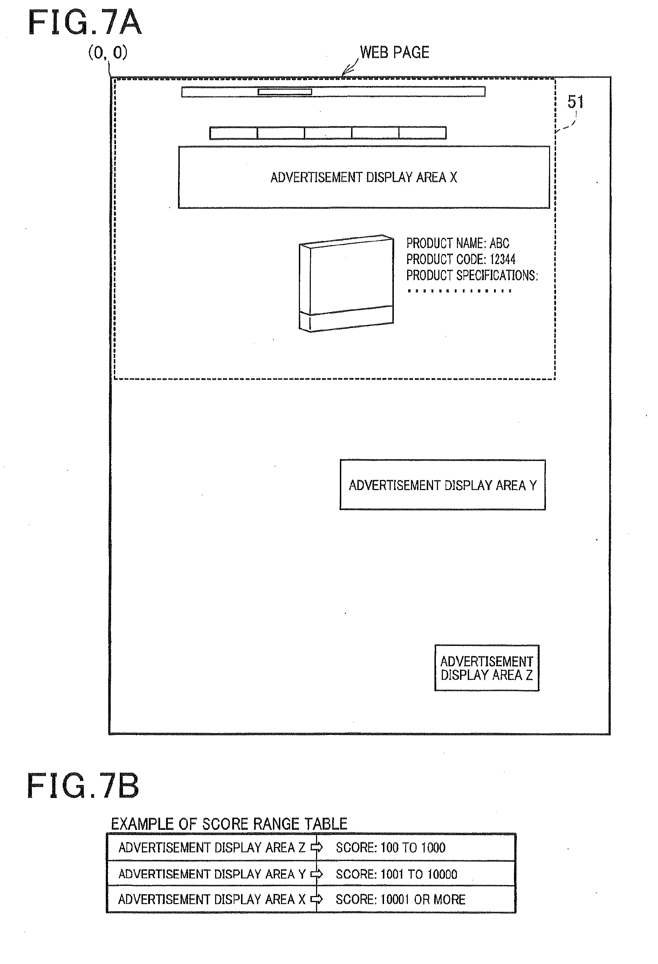

Fig. 7A is a view illustrating an example of an advertisement display area in a webpage, and Fig. 7B is a view illustrating an example of a score range table which defines a score range which is necessary to display advertisement content in each advertisement display area. Three advertisement display areas X, Y and Z are provided in the webpage illustrated in Fig. 7A, and respective sizes (occupying areas) and arrangement positions are different from each other. Further, with an example illustrated in Fig. 7A, a size of a broken line frame 51 corresponds to a size of a window screen of the web browser. That is, although the entire area of the webpage illustrated in Fig. 7A cannot be displayed in the window screen at once, when the user scrolls the webpage according to a scroll operation, the entire area of the webpage can be displayed in the window screen.

Further, the respective advertisement display areas X, Y and Z are assigned unique area IDs. The advertisement display area X illustrated in Fig. 7A is provided at the most distinctive position in an area which is first displayed in the window screen of the user terminal 1-j and in a wide range, so that an advertisement effect maximizes. Meanwhile, the advertisement display area Z illustrated in Fig. 7A is provided in an area which is displayed later after the webpage is scrolled instead of in an area which is first displayed in the window screen of the user terminal 1-j, and in a narrow range, so that the advertisement effect minimizes. Hence, with the example of the score range table illustrated in Fig. 7B, a score which is necessary to display advertisement content in the advertisement display area X is the largest. The system control unit 33 refers to such a score range table (stored in, for example, the RAM), and determines the advertisement display area associated with the score range including the score of the determined product of interest. In addition, when there is a plurality of determined products of interest, the system control unit 33 determines (allocates) an advertisement display area for each product of interest.

Meanwhile, the sizes and the arrangement positions of the advertisement display areas X, Y and Z, and score ranges matching the advertisement display areas X, Y and Z are set based on, for example, cost performance. An example of cost performance includes comparison between "a distribution increase amount/increase amount of money of a product" and "an advertisement unit price", comparison between "an affiliate profit estimated amount" and "an advertisement unit price" or comparison between "an increase amount of money of an advertisement price unit based on increase in the number of PVs (Page Views)/UUs (Unique Users)" and "an advertisement unit price", and the sizes of the arrangement positions of the advertisement display areas and the corresponding score ranges are set based on the comparison result.

In addition, although the advertisement display areas X to Z are defined in structured document to be provided in a webpage in advance with the example illustrated in Fig. 7A, a configuration may be employed where a position coordinates (x, y) at which an advertisement display area are defined in the structured document, and an advertisement display area of a size matching the score of the determined product of interest is set in the structured document. Alternatively, a configuration may be employed where the sizes of the advertisement display areas X to Z provided in a webpage in advance are made identical (for example, the size of the advertisement display area Y), and the sizes of these advertisement display areas may be enlarged or reduced to the size matching the score of the determined product of interest (a change setting to enlarge or reduce a size in a tag which defines the advertisement display area in the structured document). By this means, it is possible to flexibility change the size of the advertisement display area according to, for example, an advertisement fee which is necessary to set the product to the advertisement display area.

In addition, an area ID of the advertisement display area determined with respect to the product of interest is associated with the product ID of the product of interest and the score of the product of interest, and stored in, for example, the RAM.

Next, the system control unit 33 determines whether or not the same advertisement display area is determined with respect to a plurality of products of interest (step S11). Further, the system control unit 33 proceeds to step S13 when determining that the same advertisement display area is not determined with respect to a plurality of products of interest (NO in step S11). Meanwhile, the system control unit 33 executes advertisement display area adjustment processing (step S12) when determining that the same advertisement display area is determined with respect to a plurality of products of interest (YES in step S11:), and then proceeds to step S13.

As an example of the advertisement display area adjustment processing, the system control unit 33 divides the advertisement display area determined for a plurality of products of interest by the number of products of interest (the advertisement display areas defined in the structured document are divided and set), and re-determines each divided advertisement display area with respect to each product of interest. By this means, even when the same advertisement display area is determined for a plurality of products of interest, it is possible to display advertisement content of each product of interest in an advertisement display area. Meanwhile, a configuration may be employed where an advertisement display area is enlarged at a predetermined rate (for example, 150%) (a change setting to enlarge the size in a tag which defines the advertisement display area in the structured document) before being divided, and the enlarged advertisement display area is divided by the number of products of interest. In addition, the advertisement display area may be divided evenly per product of interest, or divided into different sizes between products of interest (for example, sizes to match scores) . In case of the latter, an advertisement display area having a larger size is allocated to a product of interest having a higher score.

Further, a configuration may be employed as another example of the advertisement display area adjustment processing where, for example, the system control unit 33 adds a plurality of advertisement display areas for a plurality of products of interest of which number corresponds to the number of products of interest - 1 (additionally sets an advertisement display area in the structured document), and re-determines each advertisement display area for each product of interest (in this case, each advertisement display area may be reduced at a predetermined rate (for example 70%) (a change setting to reduce the size in a tag which defines the advertisement display area in the structured document)). By this means, even when the same advertisement display area is determined for a plurality of products of interest, it is possible to display advertisement content of each product of interest in an advertisement display area.

Further, a configuration may be employed as another example of the advertisement display area adjustment processing where the system control unit 33 selects one of a plurality of products of interest based on, for example, a predetermined selection criterion, and determines (allocates) the advertisement display area only to the selected product of interest. Meanwhile, the selection criterion is directed to, for example, selecting a product of interest having the highest score among a plurality of products of interest or selecting one product of interest at random among a plurality of products of interest. In addition, a configuration may be employed where an advertisement display area which is one size smaller (for example, the advertisement display area X illustrated in Fig. 7A is changed to Y) is allocated to a product of interest which is not selected in this case. By this means, when an advertisement display area which is one size smaller is allocated to a plurality of products of interest, the system control unit 33 executes one of the above advertisement display area adjustment processing again.

Next, in step S13, the system control unit 33 determines (determines using a user ID) a poster (affiliator) who is an affiliate subject to reward payment associated with a product of interest for which the advertisement display area is determined in above step S10 or S12. For example, the system control unit 33 first distinguishes the score of the product of interest from a score of each poster who contributes to this score. The score of the product of interest is calculated based on posting information from each poster, so that, when the score matching each posting information is learned, it is possible to determine the poster matching each score. Meanwhile, a product of interest which is a posting target is selected as a commercial transaction target (selected as a purchase target by a purchaser), so that it may be said that the score of each poster is the degree of contribution of the poster to the score (the degree of attention) . For example, it is assumed that the score of the product of interest is 22 p, a score of a poster a is 10 p, a score of a poster b is 6 p, a score of a poster c is 3 p, a score of a poster d is 2 p and a score of a poster e is 1 p. In this case, the degree of contribution of the poster a is 45% (10 p/22 p), the degree of contribution of the poster b is 27% (6 p/22 p), the degree of contribution of the poster c is 14% (3 p/22 p), the degree of contribution of the poster d is 9% (2 p/22 p) and the degree of contribution of the poster e is 5% (1 p/22 p). Further, the system control unit 33 determines one or more posters from the distinguished posters. When there is a plurality of posters, the system control unit 33 compares the score of each poster, sorts the score in order from the highest score, determines the score ranking and determines the posters from the first rank (the highest score) to a predetermined rank order in the score ranking. Alternatively, the system control unit 33 compares the score of each poster and a threshold, and determines a poster having the score equal to or more than is the threshold. By this means, even when there is a plurality of posters, it is possible to quickly determine posters who are subject to the affiliate reward payment. When a plurality of posters is finally determined by determining the posters in this way, the system control unit 33 determines a distribution of the affiliate reward according to the score (the degree of contribution) of each poster. In addition, when there is a plurality of products of interest for which the advertisement display areas are determined in above step S10 or S12, a poster who is subject to the affiliate reward payment is determined per product of interest and, when a plurality of posters is finally determined, the distribution of the affiliate reward is determined per product of interest. By this means, it is possible to further increase a user's motivation for posting. In addition, when an affiliate link is not set to an advertisement display area in step S16 described below, processing in step S15 does not need to be performed.

Further, a user ID of a poster who is determined in relation to the product of interest is associated with, for example, a product ID of the product of interest, and is stored in, for example, the RAM. Furthermore, information indicating the distribution of the affiliate reward when a plurality of posters are determined in relation to the product of interest is associated with, for example, the product ID of the product of interest, and is stored in, for example, the RAM.

Next, the system control unit 33 determines (determines using a store ID) a store which sells the product of interest for which the advertisement display area is determined in above step S10 or S12 (step S14). For example, the system control unit 33 refers to the store information database 322, and determines a store matching store information including the product ID of the product of interest. When there is a plurality of stores matching the store information including the product ID of the product of interest, the system control unit 33 determines one of a plurality of stores (for example, selects a store which has an inventory of the product of interest) based on, for example, at least one of sales price information of the product of interest included in the store information of each store and inventory information of the product of interest. Alternatively, for example, the system control unit 33 refers to the store information database 322, and determines a store matching store information including the product ID of the product of interest and information indicating whether or not affiliate reward payment is available. When there is a plurality of stores matching the store information including the product ID of the product of interest and information indicating whether or not affiliate reward payment is available, the system control unit 33 determines one of a plurality of stores (for example, selects a store which has an inventory of the product of interest) based on, for example, at least one of sales price information of the product of interest included in the store information of each store and inventory information of the product of interest. Further, a configuration may be employed to select a store which has an inventory of the product of interest and provides the lowest sales price for the product of interest is determined. By this means, it is possible to enable users who browse advertisement content of the product of interest to quickly execute commercial transaction of the product of interest at a store which provides the lowest price for the product or a store which surely has an inventory of the product. Nevertheless, if the stores are not narrowed down to one store, for example, one store may be determined at random or a store which bids the highest bid by making each store bid for displaying advertisement content is stored. In addition, when there is a plurality of products of interest for which the advertisement display areas are determined in above step S10 or S12, a store is determined per product of interest.

Further, a store ID of the store which is determined in relation to the product of interest is associated with, for example, the product ID of the product of interest, and is stored in, for example, the RAM. Next, the system control unit 33 generates advertisement content of the product of interest for which the advertisement display area is determined in above step S10 or S12 (step S15). For example, at least one of product image data and text data of product description included in product information of the determined store is extracted from the store information database 322, and the extracted data is generated as advertisement content. In addition, when there is a plurality of products of interest for which the advertisement display areas are determined in above step S10 or S12, the advertisement content is determined per product of interest.

Next, the system control unit 33 sets the generated advertisement content (advertisement content of the product of interest for which the advertisement display area is determined in step S10 or S12) as information to be displayed in this advertisement display area, and sets link information to a product purchase procedure page or a product introduction page (a URL of a product purchase procedure page or a product introduction page) matching the store determined in above step S14, to the advertisement display area (step S16) . In addition, an ID for identifying the advertisement content is included in this link.

Alternatively, in step S16, the system control unit 33 sets the generated advertisement content (advertisement content of the product of interest for which the advertisement display area is determined in step S10 or S12) as information to be displayed in this advertisement display area, and sets an affiliate link to a product purchase procedure page matching the store determined in above step S14, to the advertisement display area. Such an affiliate link (for example, <a ···</a>) is configured to include, for example, a link reference phrase (for example, href=), a URL ("http:///.afl.xxxx.abc.co.jp/··") of a product purchase procedure page, a product ID of the product of interest for which the advertisement display area is determined in above step S10 or S12, a store ID of the store determined in above step S14, the user ID of the poster determined in above step S12 and information (for example, target="#blank" ...) of specifying advertisement content to which the link is established, and is set (described) in a tag which defines the advertisement display area in structured document configuring a webpage which is a setting target. In addition, portions of the URL of the product purchase procedure page included in the affiliate link, the product ID of the product of interest, the store ID of the store, and the user ID of the poster configure an affiliate URL (the product ID, the store ID and the user ID are, for example, encrypted) . This affiliate URL can be used as information for identifying the advertisement display area to which this affiliate URL is set. For example, the affiliate URL matching each advertisement display area and the specifying count (the number of times of clicking or the number of times of tapping) of each advertisement display area are associated and registered in a specifying count table in which the specifying count (the number of times of clicking or the number of times of tapping) of the advertisement display area is specified by a user's operation (for example, a click operation using the mouse or a tap operation on the touch panel using the finger).

Further, when the advertisement content is text data, the text data is described in specifying information in the affiliate link (for example, target="#blank">digital camera ZXGP-800 14 million pixels/30-fold zoom </a>). Furthermore, when the advertisement content is image data, the URL of the image data is described in specifying information in the affiliate link (for example, target="#blank"><img src="http://hbb.camera.abc.co.jp/GP-800%...></a>). Still further, when there is a plurality of products of interest for which the advertisement display areas are determined in above step S10 or S12, the affiliate link is set per product of interest. Moreover, when a plurality of posters are determined for one product of interest in above step S12, the user ID of each poster is included in the affiliate URL associated with the product of interest.

Next, the system control unit 33 stores, for example, a structured document file configuring a webpage in which the advertisement content is set to the advertisement display, in a memory area indicated by an accessible URL from the user terminal 1-j (step S17). By this means, when a given user terminal 1-j subsequently requests for a webpage, the system control unit 33 transmits the webpage in which the advertisement content is set to the advertisement display area, to the user terminal 1-j which made the request. By the way, in a state where the webpage in which the advertisement content is set is displayed by the web browser of the user terminal 1-j , when the advertisement display area of the advertisement content (in other words, advertisement content) is specified by a user's operation (for example, the click operation using the mouse or the tap operation on the touch panel), a request including the URL set to the advertisement display area is transmitted to the information providing server 3. Further, when receiving the request, the system control unit 33 of the information providing server 3 extracts the ID of the advertisement content from the URL included in the request, and increments by 1 the specifying count (the number of times of clicking or the number of times of tapping) registered in the specifying count table in association with this ID. According to the specifying count, it is possible to decide how many times the advertisement display area of the advertisement content is specified by the viewer.

Alternatively, in step S17, the system control unit 33 stores, for example, a structured document file configuring a webpage in which the advertisement content and the affiliate link are set to the advertisement display area, in a memory area indicated by the accessible URL from the user terminal 1-j . By this means, when a given user terminal 1-j subsequently requests for a webpage, the system control unit 33 transmits the webpage in which the advertisement content and the affiliate link are set to the advertisement display area, to the user terminal 1-j which made the request. Further, in above step S13, when the distribution of the affiliate reward for each poster related to the product of interest is determined, the user ID of each poster and information indicating the distribution of the affiliate reward to each poster are associated with the product ID of the product of interest included in store information of a store which sells the product of interest and are registered in the store information database 322.

In addition, when the processing illustrated in Fig. 5 is started in response to a request for a webpage from the user terminal 1-j of the user who logged in the information providing site, the system control unit 33 transmits the webpage set to the advertisement display area in which the advertisement content and the affiliate link are set, to the user terminal 1-j which made the request. Alternatively, when the processing illustrated in Fig. 5 is started in response to an update request for advertisement content from the user terminal 1-j of the user who logged in the information providing site, the system control unit 33 transmits the advertisement content and the affiliate link to the user terminal 1-j (web browser) which made the request and sets (inserts) the advertisement content and the affiliate link to the advertisement display area of the webpage. By this means, the advertisement content to which the link is established is displayed on a webpage.

### (2.2 Affiliate Reward Payment Operation)

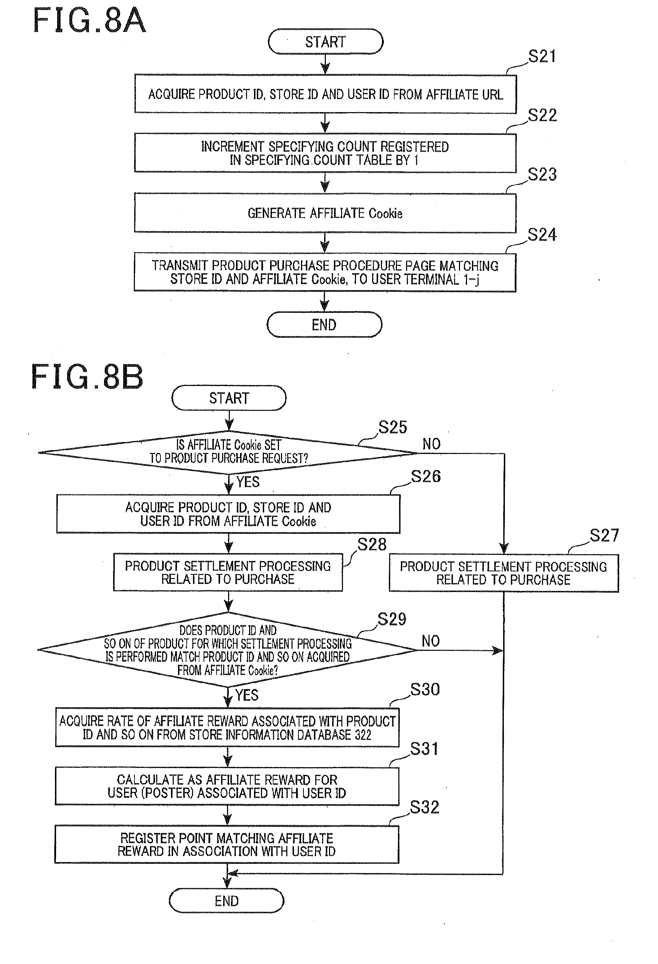

Next, an affiliate reward payment operation will be described using Figs. 8A and 8B. Fig. 8A is a flowchart illustrating processing upon reception of a page request in the system control unit 33 of the information providing server 3, and Fig. 8B is a flowchart illustrating processing upon reception of a product purchase request in the system control unit 33 of the information providing server 3.

In a state where the webpage in which the advertisement content and the affiliate link are set is received by the user terminal 1-j and is displayed on the window screen, when the advertisement display area of the advertisement content (in other words, advertisement content) is specified by a user's operation (for example, the click operation using the mouse or the tap operation on the touch panel), the web browser of the user terminal 1-j transmits a page request in which a header with the affiliate URL set to the advertisement display area, to the information providing server 3. Further, when receiving a page request, the system control unit 33 of the information providing server 3 starts processing illustrated in Fig. 8A.

When the processing illustrated in Fig. 8A is started, if the system control unit 33 acquires the affiliate URL set to the header of the received page request and recognizes that the affiliate URL is the affiliate link, the system control unit 33 acquires a product ID, a store ID and a user ID from the URL (step S21).

Next, the system control unit 33 increments by 1 the specifying count (the number of times of clicking or the number of times of tapping) registered in the specifying count table in association with the acquired affiliate URL (step S22). According to the specifying count, it is possible to decide how many times the advertisement display area of the advertisement content is specified by the viewer.

Next, the system control unit 33 generates an affiliate Cookie indicating that a viewer comes through the affiliate link (step S23). Meanwhile, the affiliate Cookie includes, for example, the product ID, the store ID, and the user ID acquired from the affiliate URL, and a Cookie expiration date (for example, a date after 30 days).

Next, the system control unit 33 transmits a product purchase procedure page associated with the acquired store ID and the generated affiliate Cookie (set to a response header for transmitting the product purchase procedure page), to the user terminal 1-j (step S24).

Thus, the user terminal 1-j which has received the product purchase procedure page and the affiliate Cookie displays the product purchase procedure page on the window screen and stores the affiliate Cookie. In addition, a configuration may be employed where affiliate information including the product ID, the store ID and the user ID of a poster which need to be included in the affiliate Cookie is associated with the user ID of the user of the user terminal 1-j (specified upon log-in of the user) and stored (for example, registered in the user information database 321) in the memory unit 32 for a predetermined period without transmitting the affiliate Cookie to the user terminal 1-j.

Further, when the user selects the number of products to purchase, a payment method and a shipping address of products and specifies an order place button for placing an order to purchase the products in the product purchase procedure page (or a page to which the page transitioned), a product purchase request including the selected information is transmitted to the information providing server 3. In this case, when the affiliate Cookie is stored in the user terminal 1-j, the affiliate Cookie is set to the header of the product purchase request, and then the product purchase request is transmitted to the information providing server 3.

In addition, even when the product purchase procedure page is displayed and product purchase procedure is interrupted (for example, display of a page is finished or a web browser is closed), the affiliate Cookie is stored in the user terminal 1-j within the expiration period of the affiliate Cookie, so that, when the product purchase procedure is performed during the expiration period, the affiliate Cookie is included in the product purchase request.

Further, when the system control unit 33 of the information providing server 3 receives the product purchase request, the system control unit 33 of the information providing server 3 starts processing illustrated in Fig. 8B.

When the processing illustrated in Fig. 8B is started, the system control unit 33 determines whether or not the affiliate Cookie is set to the received product purchase request (step S25). Further, when determining that the affiliate Cookie is not set (NO in step S25), the system control unit 33 proceeds to step S27. Meanwhile, when determining that the affiliate Cookie is set (YES in step S25), the system control unit 33 acquires a product ID, a store ID and a user ID of a poster from the affiliate Cookie (step S26), and proceeds to step S28. In addition, a configuration may be employed where the product ID, the store ID and the user ID of the poster are acquired from the user information database 321 using the user ID of the user (specified upon log-in of the user) of the user terminal 1-j which transmitted the product purchase request as a key.

Next, in step S27 or S28, the system control unit 33 performs settlement processing of a product related to the purchase based on information such as the number of products to purchase, a payment method and a shipping address of a product from the received product purchase request.

Next, the system control unit 33 determines whether or not the product ID of the product for which settlement processing was performed and a store ID which sold the product and the product ID and the store ID acquired from the affiliate Cookie match (step S29). Further, when determining that the product IDs and the store IDs do not match (NO in step S29), the system control unit 33 finishes the processing illustrated in Fig. 8B. Meanwhile, when determining that the product IDs and the store IDs match (YES in step S29), the system control unit 33 acquires the rate of the affiliate reward associated with the product ID and the store ID from the store information database 322 (step S30).

Next, the system control unit 33 calculates the amount of money obtained by multiplying the total amount of money of products for which settlement processing was performed, with the rate of the affiliate reward as an affiliate reward for the user (poster) associated with the user ID acquired from the affiliate Cookie (step S31). In addition, when there is a plurality of user IDs acquired from the affiliate Cookie (that is, a plurality of posters is determined for the products), the system control unit 33 acquires information indicating a distribution of the affiliate reward for each poster associated with each user ID, from the store information database 322, divides the calculated affiliate reward by the distribution matching each poster and calculates the affiliate reward for each poster.

Next, the system control unit 33 associates a point matching the affiliate reward calculated for the user (poster) associated with the user ID acquired from the affiliate Cookie, and the user ID to register in the user information database 321 (step S32). In other words, the point matching the affiliate reward is added to a point registered in association with the user ID (a point is given) . As described above, when purchase settlement is performed for products through an affiliate link set to an advertisement display area which displays advertisement content of a product of interest, a point indicating an affiliate reward paid for a poster associated with posting information of the product is associated with a user ID of the poster and stored.

In addition, a configuration may be employed where, when a webpage in which the affiliate link is set is a blog page is started by a given user, if purchase settlement is performed for a product through the affiliate link, a point indicating an affiliate reward is given not only to a poster of posting information about the product and a user who started the blog page. In this case, a user ID of the user who started the blog page is also included in an affiliate link in processing in above step S16, and the user ID of the user who started the blog page is also included in the affiliate Cookie in processing in above step S23.

### (2.3 Operation of Determining Advertisement Display Target Product and Resetting Advertisement Content)

Next, an operation of determining an advertisement display target product and resetting advertisement content will be described.

The processing of determining an advertisement display target and resetting advertisement content illustrated in Fig. 5 is executed multiple times if predetermined trigger conditions are satisfied (part of processing among processing in respective steps illustrated in Fig. 5 may be executed). That is, an operation of determining an advertisement display target product and resetting the advertisement content is performed according to the trigger conditions. The trigger conditions include, for example, following (e) to (g).

### (e) A predetermined time passed

In this case, the system control unit 33 serves as a control means to execute processing of determining an advertisement display target and resetting advertisement content illustrated in Fig. 5 per predetermined time (for example, every hour) according to a set time (or a set timer). Meanwhile, the predetermined time may be set per advertisement display area (for example, per advertisement display area X to Z illustrated in Fig. 7A), and, in this case, the processing illustrated in Fig. 5 is performed per advertisement display area. For example, a predetermined time is set based on an advertisement price unit set in advance according to the size and the arrangement position of the advertisement display area. For example, when the advertisement price unit is higher, the predetermined time is set shorter. By this means, it is possible to dynamically change advertisement content to be displayed in the advertisement display area per predetermined time.

### (f) A score calculation element such as the number of posts or the number of views exceeds a threshold

In this case, the system control unit 33 serves as the control means to execute processing of determining an advertisement display target and resetting advertisement content illustrated in Fig. 5 when, for example, the number of posts or the number of views which is monitored exceeds a threshold. When, for example, posting information is posted to the website 2-k through the information providing server 3, the system control unit 33 counts the number of posts upon posting (registration) of the posting information, and determines whether or not the number of posts exceeds the threshold. Alternatively, when receiving a predetermined request (for example, a request for a webpage, a log-in request and an update request for advertisement) from the user terminal 1-j, the system control unit 33 checks the number of posts of posting information to the predetermined website 2-K, and determines whether or not the number of posts exceeds the threshold. By this means, it is possible to flexibly change advertisement content to be displayed in an advertisement display area according to, for example, the number of posts or the number of views.

### (g) The specifying count (the number of times of clicking or the number of times of tapping) of an advertisement display area (advertisement content) exceeds a threshold

In this case, the system control unit 33 servers as a control means to, when an advertisement display area (advertisement content) is specified by a user's operation and thereby the specifying count (the number of times of clicking or the number of times of tapping) is incremented by 1, that is, when, for example, the specifying count (the number of times of clicking or the number of times of tapping) is incremented by 1 in above step S22, refer to the specifying count table, determines whether or not the specifying count exceeds a threshold, and, only when the specifying count exceeds the threshold, executes processing of determining the advertisement display target product and resetting advertisement content illustrated in Fig. 5 targeting only at an advertisement display area to which an affiliate URL associated with the specifying count is set. By this means, it is possible to flexibly change advertisement content to be displayed in an advertisement display area according to, for example, the specifying count.

As described above, a configuration is employed with the embodiment where the degree of attention to a product is calculated based on posting information registered in the predetermined website 2-k on the network NW, and the product which is an advertisement display target is determined based on the calculated degree of attention, so that it is possible to determine as an advertisement display target or a commercial transaction target which is recently gaining attention of users of the website 2-k or a commercial transaction target which is likely to gain attention instead of determining an advertisement display target according to an intention of not a provider side (an advertiser side) but a user side and, consequently, promote commercial transaction through the network NW more than ever.

Further, according to the embodiment, in addition to conventional affiliate programs, affiliators can increase channels through which the affiliators can obtain an affiliate reward. Furthermore, although there are cases in the conventional affiliate programs where an operation of acquiring affiliate links about, for example, predetermined products, and setting these affiliate links to the webpage of the user one by one is necessary and complex for a user who starts a webpage such as a blog, and, for people who are not used to an operation of the user terminals 1-j or people who are not familiar with affiliate programs in particular, this operation is difficult in some cases, it is possible to reduce, for example, complexity of this operation according to the embodiment. Still further, a product which is an advertisement display target is determined based on posting information posted by a poster, so that it is possible to increase a poster's motivation for posting (a poster's diligent effort for posting will work and, consequently, it can be expected that the poster can more earnestly perform a posting operation).

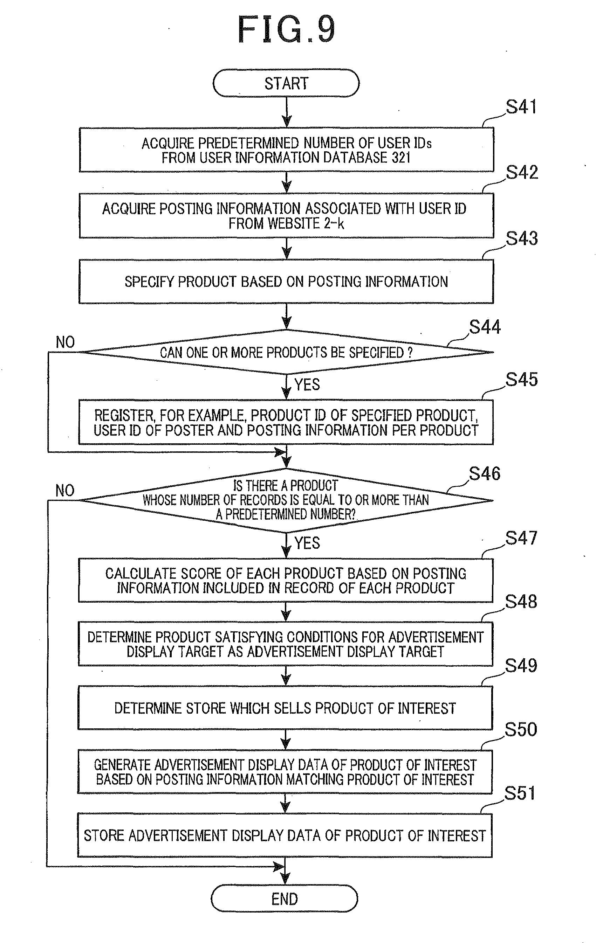

In addition, a configuration may be employed to utilize the embodiment where advertisement content (image data) and a source code or a source code including advertisement content (text data) are generated as advertisement display data of a product of interest. This configuration can solve a problem that there is conventionally difficulty in generating an appealing banner advertisement which flexibly reflects content of an advertisement target product which is getting popular or gaining attention among users, from display content of banner advertisement determined according to an intention of a provider side (advertiser side). Hereinafter, an operation of generating advertisement display data will be described using Fig. 9. Fig. 9 is a flowchart illustrating advertisement display data generation processing in the system control unit 33 of the information providing server 3. This advertisement display data generation processing is started when, for example, an instruction is received from an operator or a request for a webpage or an update request for advertisement content is received from the user terminal 1-j which accessed an information providing site. In addition, processing in step S41 to S47 illustrated in Fig. 9 are the same as in steps S1 to S7 illustrated in Fig. 5, and overlapping description will be skipped. In step S42, by acquiring posting information associated with each user ID, it is possible to generate advertisement display data of a product based on posting information posted by a specific user. In addition, a configuration may be employed where all pieces of posting information are acquired instead of posting information associated with user IDs registered in the user information database 321.

In step S48, the system control unit 33 determines (determines using a product ID) as an advertisement display target a product (a product of interest) satisfying conditions for the advertisement display target, based on posting information included in a record of each product extracted in above step S46. For example, the system control unit 33 determines as an advertisement display target a product of interest having a score which is calculated in above step S47 and which satisfies conditions for the advertisement display target. For example, a product at the first rank (highest score) in the score ranking is a condition for the advertisement display target. In this case, the system control unit 33 compares the score of each product, sorts the score in order from the highest score, determines the score ranking, and determines a product at the first rank in the score ranking as a product of interest. By this means, it is possible to determine the product which is the most popular or is gaining attention among users. Further, the system control unit 33 may determine a product having a score of a product equal to or more than a threshold as a condition for an advertisement display target.

Furthermore, a configuration may be employed where, for example, the system control unit 33 determines a product registered (for example, a product ID is registered) in a candidate list of products (referred to as "advertisement display target candidate list" below) which are advertisement display target candidates stored in the memory unit 32 in advance among each product extracted in above step S46, as a product of interest which satisfies a condition for the advertisement display target. That is, in this case, a product registered in the advertisement display target candidate list is the condition for the advertisement display target. Meanwhile, product IDs of products which are determined by a business operator side as products which need to be sold (for example, for sale) are registered in the advertisement display target candidate list. Further, for example, products which are at the first rank to a predetermined rank order (for example, at the tenth rank) in the score ranking and are registered in the advertisement display target candidate list may be the condition for the advertisement display target. By this means, it is possible to determine a product which the business operator side needs to sell from products which are the most popular or are gaining attention among users.

Next, in step S49, the system control unit 33 determines (determines using a store ID) a store which sells the product of interest which is determined in above step S48 in the same manner as in above step S14. Next, the system control unit 33 generates advertisement display data of the product of interest based on posting information matching the product of interest determined in above step S48 (step S50). Meanwhile, generation of advertisement display data will be described in more details.

When advertisement content is generated from text information (text data) included in posting information, the system control unit 33 extracts a predetermined number of characters (for example, 30 characters) from a characteristic character string from text information included in posting information matching the product of interest determined in above step S48. Such a characteristic character string can be extracted by, for example, a technique of generating a snippet such as a summary of a webpage. Further, when the system control unit 33 is configured to specify a character string including only positive words (in other words, excluding negative word) from posting information matching the product of interest, and extract a more characteristic character string by the technique of generating a snippet, it is possible to extract a more appealing characteristic character string.

In addition, a configuration may be employed where a term representing, for example, a name of a product of interest is not included in the extracted character string, the term representing, for example, the name of the product of interest is extracted from the store information database 322 and embedded in the character string. Further, the system control unit 33 generates advertisement content for displaying the extracted character string. For example, image data for displaying the extracted character string (for example, "these are the products XYZ which will help you a lot in the coming season") is generated as advertisement content. Alternatively, the text data representing the extracted character string is generated as advertisement content. According to the configuration, it is possible to generate advertisement content including a characteristic string posted by a user and, consequently, interest viewers. Further, buzzwords are expected to come out from such advertisement content. Meanwhile, to generate advertisement content from image data included in posting information, the system control unit 33 acquires image data from posting information matching the product of interest determined in above step S48. Further, the system control unit 33 generates advertisement content including the acquired image data.

Next, the system control unit 33 generates a source code for displaying the generated advertisement content. When the advertisement content includes image data, the source code is generated as, for example, "<A href="http://www.abc.com/" target=#'blank'><IMG src="http://www.abc.com/banner/1001.gif"></A>". Meanwhile, "A href="httpe//www.abc.com/" is a link reference phrase and a URL of a link destination. The link destination is a webpage to jump to when, for example, the advertisement content is clicked using the mouse or tapped on the touch panel by the finger. The URL of the link destination is, for example, a URL of a webpage of the store determined in above step S48 (for example, a webpage for performing purchase procedure (commercial transaction) of a product or a webpage for introducing to a product). Further, a URL included in specifying information "target=# 'blank' ><IMG src=" ... " of advertisement content (for example, a banner having a size of width="300" height="60") to which a link is established is a URL of advertisement content. Meanwhile, when advertisement content includes text data, the source code is generated as, for example, "<A href="http://www.abc.com/" target=#'blank'> these are products XYZ which will help you a lot in the coming season</A>". The URL immediately after the link reference phrase may be an affiliate link. When purchase settlement is performed for a product through the affiliate link, affiliate result reward is paid to a poster associated with posting information about the product.

As described above, the system control unit 33 generates advertisement content (image data) and a source code or a source code including advertisement content (test data) as advertisement display data of a product of interest. In addition, although the system control unit 33 may determine as advertisement display data the advertisement content generated without generating the source code, advertisement display data including a source code provides a greater advantage that users can easily handle the advertisement display data as banner advertisement.

Next, the system control unit 33 stores the generated advertisement display data of the product of interest in the memory unit 32 (step S51). Then, when a given user terminal 1-j requests for a predetermined webpage, the system control unit 33 generates a webpage for displaying the source code included in the advertisement display data, transmits the webpage to the user terminal 1-j and causes the user terminal 1-j to display the webpage on the web browser. Further, the source code displayed on the webpage is copied by a user's operation of the user terminal 1-j, and is embedded in a blog page (for example, pasted in, for example, a new article entry field) opened by the user. Consequently, it is possible to display advertisement content on the blog page.

In addition, when the processing illustrated in Fig. 9 is started in response to the request for the webpage from the user terminal 1-j which accessed the information providing site, the system control unit 33 generates a webpage including an advertisement display area to which the generated advertisement display data is set (that is, a webpage in which a source code included in advertisement display data is embedded (described) in structured document (for example, a HTML tag)), transmits the generated webpage to the user terminal 1-j and causes the user terminal 1-j to display the webpage on the web browser. Consequently, it is possible to display advertisement content on the webpage. Alternatively, when the processing illustrated in Fig. 9 is started in response to an update request for advertisement content from the user terminal 1-j which accessed the information providing site, the system control unit 33 transmits a file which stores a source code included in the generated advertisement display data to the user terminal 1-j, and sets (embeds in structured document) the file to the advertisement display area of the webpage. Consequently, it is possible to display advertisement content on the webpage.

As described above, a configuration has been employed with the embodiment where a product satisfying conditions for an advertisement display target is determined based on posting information registered in the predetermined website 2-k on the network NW, and advertisement display data of the product is generated based on posting information matching the product. Consequently, it is possible to solve a problem that there is conventionally difficulty in generating an appealing banner advertisement which flexibly reflects content of an advertisement target product which is getting popular or gaining attention among users, and generate an appealing advertisement display data which flexibly reflects, for example, a user's opinion posted for a product which is getting popular or gaining attention among users on the network NW. Further, it is possible to generate advertisement display data content of which dynamically changes depending on, for example, a situation in a social network.

In addition, a configuration may be employed with the embodiment where, in a state where a webpage including an advertisement display area to which the generated advertisement display data is set is displayed on a web browser of the user terminal 1-j, if the advertisement display area (advertisement content) is pointed by a pointer of a pointing device (for example, the mouse) operated by the user (in other words, the pointer being moved on the screen by the user's operation is placed over advertisement content (mouse-overed)), the information providing server 3 provides pop-up display of additional information related to a product of interest matching the advertisement display data on the webpage. In this case, the information providing server 3 or the web browser functions as a display control means to compare the advertisement display area of the webpage and a pointer position of the pointing device in the webpage, and display additional information related to a product of interest matching the advertisement display data, on the webpage based on the comparison result. Meanwhile, the pop-up display can be realized by describing an onmouseover attribute and an onmouseout attribute in the structured document configuring the webpage. Then, the onmouseover attribute is directed to specifying a script which is activated when the pointer mouse-overs advertisement content, and the onmouseout attribute is directed to specifying a script which is activated when the pointer mouse-outs the advertisement content. For example, by describing <A href="URL of link destination" onMouseover="disp#mess(1)" onMouseout="del#mess(1)">advertisement content</a> in a tag of structured document and describing message[1] ='additional information' corresponding to mess(1) in a tag of structured document, additional information is provided in pop-up display (disp) on advertisement content when the pointer mouse-overs the advertisement content, and additional information is deleted (del) when the pointer mouse-outs the advertisement content. Further, the additional information provided in pop-up display is extracted from text information included in posting information in, for example, above step S10. Although this configuration has limitation in the number of characters in a characteristic character string extracted for advertisement content, from text information included in posting information, a portion of the character string beyond the limitation can be provided in pop-up display as additional information. Consequently, it is possible to generate appealing advertisement display data which clearly reflects, for example, a user opinion posted for a product. In addition, a configuration may be employed where product description corresponding to a product of interest is acquired from the store information database 322, and the acquired product description is used as additional information.

### Reference Signs List

| | |
|---|---|
| 1-j | USER TERMINAL |
| 2-k | WEBSITE |
| 3 | INFORMATION PROVIDING SERVER |
| 31 | COMMUNICATION UNIT |
| 32 | MEMORY UNIT |
| 33 | SYSTEM CONTROL UNIT |
| 321 | USER INFORMATION DATABASE |
| 322 | STORE INFORMATION DATABASE |
| 323 | POSTING INFORMATION DATABASE |
| NW | NETWORK |
| S | INFORMATION PROVIDING SYSTEM |

## Claims

1. An information processing device which provides display data including an advertisement display area, to a terminal device through a network,
the information processing device comprising:
a posting information acquiring means that acquires posting information registered in a site on the network;
a commercial transaction target specifying means that specifies a commercial transaction target based on the acquired posting information;
an attention degree calculating means that calculates a degree of attention of the commercial transaction target specified based on the acquired posting information; and
an advertisement display target determining means that determines the commercial transaction target which is an advertisement display target based on the calculated degree of attention.

2. The information processing device according to claim 1,
further comprising a first setting means that sets information matching a commercial transaction target which is determined as the advertisement display target, as information to be displayed in an advertisement display area.

3. The information processing device according to claim 1 or 2,
wherein the attention degree calculating means calculates the degree of attention based on at least one of elements of a number of posts of the posting information, a number of views of the posting information, a number of replies to the posting information and a number of in-bound links to the posting information.

4. The information processing device according to claim 1 or 2,
wherein the attention degree calculating means calculates the degree of attention based on a number of followers of a poster of the posting information.

5. The information processing device according to claim 1 or 2,
wherein the attention degree calculating means calculates, as the degree of attention, a sum of conversion points stored in advance in association with at least two or more elements of a number of posts of the posting information, a number of views of the posting information, a number of replies to the posting information, a number of in-bound links to the posting information and a number of followers of the posting information.

6. The information processing device according to claim 1 or 2,
wherein the attention degree calculating means calculates, as the degree of attention, a sum of an evaluation point stored in advance in association with information related to an evaluation for the commercial transaction target included in the posting information.

7. The information processing device according to any one of claims 1, 3 and 6,
wherein the posting information acquiring means acquires the posting information corresponding to user specifying information which is stored in a user information memory means and which is used to specify a user, from a first site; and
the information processing device comprises:
a second setting means that sets, as information displayed in the advertisement display area, information matching the commercial transaction target determined as the advertisement display target, and that sets link information matching a second site for performing commercial transaction of the commercial transaction target, to the advertisement display area; and
a reward information storing means that, when the commercial transaction is performed through the link information set to the advertisement display area, associates reward information paid for the user associated with the posting information of the commercial transaction target, with the user specifying information, to be stored in the user information memory means.

8. The information processing device according to claim 7,
further comprising a payment target user determining means that, when there are a plurality of users associated with the posting information of the commercial transaction target for which the commercial transaction is performed through the link information, determines a user who is a payment target of the reward based on posting information associated with each of the users.

9. The information processing device according to claim 8, further comprising
a reward distribution determining means that, when the payment target user determining means determines a plurality of users who are payment targets of the reward, determines a distribution of reward information paid to each of the determined users based on a degree of contribution of each of the users for the degree of attention for selecting the commercial transaction target as a commercial transaction target.

10. The information processing device according to any one of claims 7 to 9, further comprising
a provider source selecting means that selects one or more provider sources based on at least one of inventory information and price information of the commercial transaction target from a plurality of provider sources whose provider source specifying information is stored in a provider source information memory means that associates and stores at least one of the provider source specifying information for specifying a provider source of the commercial transaction target, and the inventory information and the price information of the commercial transaction target provided from the provider source,
wherein the second setting means sets link information matching a second site for the selected provider source to perform the commercial transaction of the commercial transaction target, to the advertisement display area.

11. The information processing device according to any one of claims 7 to 10,
wherein the advertisement display target determining means determines a plurality of commercial transaction targets as the advertisement display target based on the posting information of the specified commercial transaction target; and
the second setting means sets information matching each of the commercial transaction targets, to the advertisement display area divided by a number corresponding to a number of the determined commercial transaction targets.

12. The information processing device according to any one of claims 7 to 10,
wherein a size of the advertisement display area is set in advance;
the information processing device further comprises an advertisement display area changing means that enlarges or reduces the size of the advertisement display area based on the posting information of the specified commercial transaction target; and
the second setting means sets information matching the commercial transaction target, to the advertisement display area whose size is enlarged or reduced.

13. The information processing device according to any one of claims 1 to 12, further comprising
a control means that causes a part or all of processes performed by the posting information acquiring means, the commercial transaction target specifying means, the attention degree calculating means and the advertisement display target determining means to be executed per predetermined time period.

14. The information processing device according to any one of claims 1 to 12, further comprising
a control means that causes a part or all of processes performed by the posting information acquiring means, the commercial transaction target specifying means, the attention degree calculating means and the advertisement display target determining means to be executed when at least a number of posts of the posting information to the site exceeds a threshold.

15. The information processing device according to any one of claims 1 to 12, further comprising
a control means that causes a part or all of processes performed by the posting information acquiring means, the commercial transaction target specifying means, the attention degree calculating means and the advertisement display target determining means to be executed when a specifying count of the advertisement display area exceeds a threshold.

16. The information processing device according to any one of claims 1 to 15, further comprising
an advertisement display area determining means that determines the advertisement display area for displaying information matching the determined commercial transaction target, based on the calculated degree of attention.

17. The information processing device according to any one of claims 2 to 16,
wherein the first setting means or the second setting means sets information matching the commercial transaction target determined as the advertisement display target, as information to be displayed in the advertisement display area, only when the calculated degree of attention is higher than a threshold.

18. The information processing device according to any one of claims 1 to 6, further comprising
an advertisement display data generating means that generates advertisement display data of the commercial transaction target based on posting information matching a commercial transaction target determined as the advertisement display target.

19. The information processing device according to claim 18,
wherein the posting information acquiring means acquires, from the site, the posting information corresponding user specifying information which is stored in a user information memory means and which is used to specify a user.

20. The information processing device according to claim 18 or 19,
wherein the advertisement display target determining means determines, as the advertisement display target, a commercial transaction target registered in a candidate list of commercial transaction targets which are advertisement display target candidates stored in a candidate list memory means among commercial transaction targets specified by the commercial transaction target specifying means.

21. The information processing device according to claims 18 to 20,
wherein the advertisement display data generating means extracts a characteristic character string from text information included in the posting information matching the commercial transaction target, and generates advertisement display data for displaying the extracted character string.

22. The information processing device according to claims 18 to 21, further comprising:
a screen data generating means that generates screen data including an advertisement display area to which the generated advertisement display data is set; and
a transmitting means that transmits the generated screen data to a terminal device which is accessed through a network.

23. The information processing device according to claim 22, further comprising
a display control means that compares the advertisement display area of the display data and a pointer position of a pointing device in the display data, and displays additional information related to the commercial transaction target matching the advertisement display data, on the screen data, based on the comparison result.

24. An information processing method executed by a computer which provides screen data including an advertisement display area, to a terminal device through a network,
the information processing method comprising:
a step of acquiring posting information registered in a site on the network;
a step of specifying a commercial transaction target based on the acquired posting information;
a step of calculating a degree of attention of the commercial transaction target specified based on the acquired posting information; and
a step of determining the commercial transaction target which is an advertisement display target based on the calculated degree of attention.

25. An information processing program causing a computer that provides screen data including an advertisement display area, to a terminal device through a network, to function as:
a posting information acquiring means that acquires posting information registered in a site on the network;
a commercial transaction target specifying means that specifies a commercial transaction target based on the acquired posting information;
an attention degree calculating means that calculates a degree of attention of the commercial transaction target specified based on the acquired posting information; and
an advertisement display target determining means that determines the commercial transaction target which is an advertisement display target based on the calculated degree of attention.

26. A recording medium having an information processing program recorded thereon that causes a computer that provides screen data including an advertisement display area, to a terminal device through a network, to function as:
a posting information acquiring means that acquires posting information registered in a site on the network;
a commercial transaction target specifying means that specifies a commercial transaction target based on the acquired posting information;
an attention degree calculating means that calculates a degree of attention of the commercial transaction target specified based on the acquired posting information; and
an advertisement display target determining means that determines the commercial transaction target which is an advertisement display target based on the calculated degree of attention.
